# EUROPÄISCHE PATENTSCHRIFT

(11) **EP 1 288 281 B1**
(45) Veröffentlichungstag und Bekanntmachung des Hinweises auf die Patenterteilung: **02.11.2005**
(21) Anmeldenummer: 02017054.4
(22) Anmeldetag: 27.07.2002
(51) Int. Cl.: C11D 1/72, C08L 71/02, C08G 65/32

(54) **Geminitenside und Polyethylenglycol**
Gemini surfactants and polyethylene glycol
Tensioactifs gémini et polyéthylène glycol

(30) Priorität: 07.08.2001 DE 10137925
(43) Veröffentlichungstag der Anmeldung: 05.03.2003
(73) Patentinhaber: Cognis IP Management GmbH, 40589 Düsseldorf (DE)
(72) Erfinder: Kischkel, Ditmar, 40789 Monheim (DE); Raths, Hans-Christian, Dr., 40789 Monheim (DE); Weuthen, Manfred, Dr., 40764 Langenfeld (DE); Elsner, Michael, 42579 Heiligenhaus (DE)

(56) Entgegenhaltungen:
- EP-A- 1 254 948
- WO-A-96/18711
- DE-A- 19 758 176
- US-A- 4 818 427
- US-A- 4 925 587
- US-A- 6 063 309

## Beschreibung

### Gebiet der Erfindung

Die Erfindung betrifft Mischungen, enthaltend Geminitenside und Polyethylenglycol, gegebenenfalls in Verbindung mit weiteren nichtionischen Tensiden, ein Verfahren zu deren Herstellung, sowie die Verwendung derartiger Mischungen in Wasch-, Spül- und Reinigungsmittel und zur Verbesserung des Netzverhaltens an verschiedenen Oberflächen.

### Stand der Technik

Zur Herstellung von Wasch-, Spül- und Reinigungsmittel werden bevorzugt Tensidmischungen in fester Form, also als Granulate, Schuppen, Pulver, Pellets oder Pastillen eingesetzt.
Besonders auf dem Gebiet der maschinellen Geschirr-Reiniger besteht ein erhöhter Bedarf feste Tensidmischungen direkt einarbeiten zu können. Vom Verbraucher werden nun bevorzugt kombinierte Produkte aus Geschirr-Reiniger mit eingebautem Klarspüler für den Haushalt als auch im gewerblichen Bereich verlangt. Bisher wurde in Haushaltsgeschirrspülem der Klarspüler vorher extra zudosiert und dann nach dem Vorspül- und Reinigungsgang bei knapp 40°C-65°C in die Spülkammer freigesetzt. Bei den kombinierten Geschirr-Reinigern (z.B. "2 in 1"- Tabs oder Pulver, d.h. Reiniger und Klarspüler; "3 in 1"- Tabs oder Pulver, d.h. Reiniger, Klarspüler und Regeneriersalz) löst sich der Klarspüler zeitversetzt zum Reinigungsmittel und wird so der Spülflotte zugesetzt.
Die gewerblichen Geschirrspülmaschinen arbeiten zudem mit nur einer Reinigungsflotte, die lediglich durch Zugabe der Spüllösung aus dem vorhergehenden Spülvorgang erneuert wird. Es findet also während des gesamten Spülprogrammes kein vollständiger Wasseraustausch statt. Daher muß der Reiniger auch schaumdämpfend wirken, temperaturstabil sein bei einem starken Temperaturgefälle von 85-35°C und außerdem ausreichend stabil gegen Alkali und Aktivchlor sein.
In der WO 99/35225 (Henkel) werden Geschirrspülmittelformkörper mit Tensiden beschrieben, die bereits Klarspüler enthalten. Im Gegensatz zur vorliegenden Erfindung müssen die Klarspültenside zum Einsatz in den Formkörpern mit Paraffin vermischt werden und zusätzlich mit einer Hüllsubstanz umgeben werden.
Auch die WO 00/06688 (Benckiser) beschreibt Zusammensetzungen zur Verwendung in einer Geschirrspülmaschine. Die für den Einsatz als Klarspüler benannten Verbindungen werden zur Erhöhung des Schmelzpunktes mit bis zu 70% Polyethylenglycol vermischt und müssen noch zusätzlich schützenden mit mit Hüllsubstanzen in die Geschirr-Reiniger eingebracht werden. Durch den hohen Anteil an Polyethylenglycol kann entsprechend weniger Klarspülsubstanz eingebracht werden. Die in den erfindungsgemäßen Mischungen enthaltenen Geminitenside sind nicht beschrieben, außerdem lassen sich diese mit weitaus geringeren Mengen an Polyethylenglycol verarbeiten und in Reinigerformulierungen einarbeiten.

Aufgabe der vorliegenden Erfindung war es Mischungen bereitzustellen, die sich vereinfacht in Reiniger-Formulierungen einarbeiten lassen. Zudem sollten diese ein gutes Schaum- und Reinigungsverhalten, insbesondere jedoch ein sehr gutes Ablaufverhalten, d.h. eine Verbesserung des Netzverhaltens an harten Oberflächen, sowie eine hohe Materialverträglichkeit zeigen. Weiterhin sollten die erfindungsgemäßen Mischungen ohne Zusatz von Hüllsubstanzen, in hoher Konzentration in Reinigerformulierungen einarbeitbar sein.
Die Aufgabe wurde gelöst, indem ausgewählte Tenside vom Typ Geminitenside in Kombination mit Polyethylenglycol eingesetzt werden.

### Beschreibung der Erfindung

Gegenstand der Erfindung sind Mischungen enthaltend,
a. Geminitenside gemäß Formel (I)

   **R**^{**1**}**-CHOH-CH**_{**2**}**-[OCH**_{**2**}**CH**_{**2**}**]x-O-CH**_{**2**}**-CHOH-R (I)** (I)

   in der R und R1 unabhängig voneinander für einen linearen oder verzweigten Alkyl- und/oder Alkenylrest mit 4 bis 22 Kohlenstoffatomen und x für 5 bis 400 stehen,
b. Polyethylenglycol (PEG) und
c. gegebenenfalls weitere nichtionische Tenside, dadurch gekennzeichnet, dass die Geminitenside der Formel (I) und Polyethylenglycol im Verhältnis (a:b) 100:1 bis 1:2 vorliegen.

### Geminitenside

Allgemein werden Geminitenside durch Umsetzung von 1,2-Epoxyalkanen (CH₂CHO-R) bzw. (CH₂CHO-R1) oder deren Mischungen, wobei R und R1 für einen linearen oder verzweigten, gesättigten oder ungesättigten Alkyl- und/oder Alkenylrest steht, mit Polyolen hergestellt.

Hierbei ist Polyol als die Sammelbezeichnung für mehrwertige Alkohole bzw. Polyalkylenglycole, d. h. als eine organische Verbindung, die mindestens zwei Hydroxy-Gruppen im Mol enthält, zu betrachten. Unter den Polyalkylenglycolen sind auch Umsetzungsprodukte von mehrwertigen Alkoholen mit Alkoxylierungsreagenzien wie Ethylenoxid und Propylenoxid zu verstehen.

Im Sinne der Erfindung wird Polyethylenglycol **HO-[OCH**_{**2**}**CH**_{**2**}**]x-OH** als Polyol eingesetzt.
Besonders bevorzugt sind Geminitenside der Formel (I), wobei x für 5 bis 400, vorzugsweise für 10 bis 100 und insbesondere für 10 bis 50 steht.

Weiterhin bevorzugt sind Mischungen enthaltend Geminitenside der Formel (I), wobei R und R1 unabhängig voneinander für einen linearen oder verzweigten Alkylrest mit 4 bis 22 Kohlenstoffatomen, insbesondere bevorzugt für einen linearen Alkylrest mit mit 8 bis 12 Kohlenstoffatomen stehen.

In einer weiteren Ausführungsform sind Mischungen bevorzugt, die Geminitenside der Formel (I) enthalten, erhalten durch Reaktion von Polyethylenglycol mit Epoxyalkanen, wobei mindestens 60%, vorzugsweise 90%, insbesondere mindestens 95% aller freien Hydroxygruppen des Polyethylenglycols durch Epoxyalkane verschlossen sind.

Außerdem sind Mischungen bevorzugt, die Polyethylenglycol mit einem Molgewicht (g/mol) von 500 bis 300 000, vorzugsweise 1000 bis 100 000, bevorzugt 1500 bis 50 000 und insbesondere bevorzugt 1550 bis 20 000 enthalten.
Ganz besonders bevorzugt sind Mischungen, die Geminitenside der Formel (I), wobei x für 10 bis 50 steht und Polyethylenglycol mit einem Molgewicht von 3000 bis 20 000 g/mol enthalten.

Weiterhin enthalten die Mischungen Gemintenside der Formel (I) und Polyethylenglycol im Verhältnis (a:b) 100:1 bis 1:2, vorzugsweise 20:1 bis 1:1 und besonders bevorzugt 10:1 bis 2:1.
Das angegebene Verhältnis wird aus der direkt eingesetzten Menge an Geminitensid in bezug auf die der Mischung zugesetzte Menge an Polyethylenglycol berechnet.

### Nichtionische Tenside

Die erfindungsgemäßen Mischungen können **weitere nichtionische Tenside** enthalten. Typische Beispiele für nichtionische Tenside sind Alkyl- und/oder Alkenyloligoglycoside, Alkoxylate von Alkanolen, endgruppenverschlossene Alkoxylate von Alkanolen ohne freie OH-Gruppen , alkoxylierte Fettsäureniedrigalkylester, Aminoxide, Alkylphenolpolyglycolether, Fettsäurepolyglycolester, Fettsäureamidpolyglycolether, Fettaminpolyglycolether, alkoxylierte Triglyceride, Mischether bzw. Mischformale, Fettsäure-N-alkylglucamide, Proteinhydrolysate (insbesondere pflanzliche Produkte auf Weizenbasis), Polyolfettsäureester, Zuckerester, Sorbitanester, und Polysorbate. Sofem die nichtionischen Tenside Polyglycoletherketten enthalten, können diese eine konventionelle, vorzugsweise jedoch eine eingeengte Homologenverteilung aufweisen.

**Bevorzugt** sind die weiteren nichtionische Tenside ausgewählt aus der Gruppe, die gebildet wird von Alkyl- und/oder Alkenyloligoglycosiden, Alkoxylaten von Alkanolen, insbesondere Fettalkoholpolyethylenglycolether bzw. Fettalkoholpolyethylenglykol/polypropylenglykolether der Formel (III) bzw. Fettalkoholpolypropylenglykollpolyethylenglykolether der Formel (IV), endgruppenverschlossene Alkoxylate von Alkanole ohne freie OH-Gruppen, insbesondere endgruppenverschlossene Fettalkoholpolyethylenglykol/polypropylenglykolether bzw. endgruppenverschlossene Fettalkoholpolypropylenglykollpolyethylenglykolether, und alkoxylierten Fettsäureniedrigalkylester und Aminoxiden.

Insbesondere bevorzugt sind Mischungen, die als weitere nichtionische Tenside vorzugsweise Alkyl- und/oder Alkenyloligoglycoside der Formel (II), Fettalkoholpolyethylenglykol/polypropylenglykolether der Formel (III) bzw. Fettalkoholpolypropylenglykol/polyethylenglykolether der Formel (IV) oder deren Mischungen enthalten.

### Alkyl- und/oder Alkenyloligoglykoside

In einer weiteren Ausführungsform enthalten die erfindungsgemäßen Mischungen Alkyl- und/oder Alkenyloligoglykoside der Formel (II).

**R**^{**2**}**O-[G]**_{**p**} (II),

wobei R² für einen Alkyl- und/oder Alkenylrest mit 4 bis 22 Kohlenstoffatomen, G für einen Zuckerrest mit 5 oder 6 Kohlenstoffatomen und p für Zahlen von 1 bis 10 steht, enthalten sind.

Sie können nach den einschlägigen Verfahren der präparativen organischen Chemie erhalten werden.
Die Alkyl- und/oder Alkenyloligoglykoside können sich von Aldosen bzw. Ketosen mit 5 oder 6 Kohlenstoffatomen, vorzugsweise der Glucose ableiten. Die bevorzugten Alkyl- und/oder Alkenyloligoglykoside sind somit Alkyl- und/oder Alkenyloligoglucoside.
Der **Alkylrest** R² kann sich von primären **gesättigten Alkoholen** ableiten. Typische Beispiele sind Butanol-1, Capron-, Önanth-, Capryl-, Pelargon-, Caprinalkohol, Undecanol-1, Laurylalkohol, Tridecanol-1, Myristylalkohol, Pentadecanol-1, **Cetylalkohol,** Palmitylakohol, Heptadecanol-1, Stearylalkohol, Isostearylalkohol, Nonadecanol-1, Arachidylalkohol, Heneicosanol-1, und Behenylalkohol sowie deren technische Mischungen, wie sie beispielsweise bei der Hydrierung von technischen Fettsäuremethylestem oder im Verlauf der Hydrierung von Aldehyden aus der Roelen'schen Oxosynthese erhalten werden.
Der **Alkenylrest** R² kann sich von primären **ungesättigten Alkoholen** ableiten. Typische Beispiele **ungesättigter Alkohole** sind Undecen-1-ol, Oleylalkohol, Elaidylalkohol, Ricinolalkohol, Linoleylalkohol, Linolenylalkohol, Gadoleylalkohol, Arachidonalkohol, Erucaalkohol, Brassidylalkohol, Palmoleylalkohol, Petroselinylalkohol, Arachylalkohol, sowie deren technische Gemische, die wie oben beschrieben erhalten werden können.

**Bevorzugt** werden Alkyl- bzw. Alkenylrest R², die sich von primären Alkoholen mit 6 bis 16 Kohlenstoffatomen ableiten.
**Insbesondere** geeignet sind Alkyloligoglucoside der Kettenlänge C₈-C₁₀, die als Vorlauf bei der destillativen Auftrennung von technischem C₈-C₁₈-Kokosfettalkohol anfallen und mit einem Anteil von weniger als 6 Gew.-% C₁₂-Alkohol verunreinigt sein können sowie Alkyloligoglucoside auf Basis technischer C_{9/11}-Oxoalkohole.
Der Alkyl- bzw. Alkenylrest R² kann sich femer auch von primären Alkoholen mit 12 bis 14 Kohlenstoffatomen ableiten.

Die Indexzahl p in der allgemeinen Formel (II) gibt den Oligomerisierungsgrad (DP), d.h. die Verteilung von Mono- und Oligoglykosiden an und steht für eine Zahl zwischen 1 und 10. Während p in einer gegebenen Verbindung stets ganzzahlig sein muss und hier insbesondere die Werte p = 1 bis 3 annehmen kann, ist der Wert p für ein bestimmtes Alkyloligoglykosid eine analytisch ermittelte rechnerische Größe, die meistens eine gebrochene Zahl darstellt.
**Vorzugsweise** werden Alkyl- und/oder Alkenyloligoglykoside mit einem mittleren Oligomerisierungsgrad p von 1,1 bis 2,0 eingesetzt. Aus anwendungstechnischer Sicht sind solche Alkyl- und/oder Alkenyloligoglykoside bevorzugt, deren Oligomerisierungsgrad kleiner als 2,0 ist und insbesondere zwischen 1,2 und 1,7 liegt.

Bevorzugt werden Alkyl- und/oder Alkenyloligoglycoside der Formel (II) eingesetzt, wobei p für Zahlen von 1 bis 3 und R² für einen Alkylrest mit 6 bis 16 Kohlenstoffatomen steht.

### Fettalkoholpolyethylenglykol/polypropylenglykolether

In einer bevorzugten Ausführungsform werden Fettalkoholpolyethylenglykol/polypropylenglykolether der Formel (III), die gegebenenfalls endgruppenverschlossen sind,

**R**^{**6**}**O(CH**_{**2**}**CH**_{**2**}**O)**_{**n1**}**[CH**_{**2**}**(CH**_{**3**}**)CHO]**_{**m**}**R**^{**7**} (III)

eingesetzt, in der R⁶ für einen linearen oder verzweigten Alkyl- und/oder Alkenylrest mit 8 bis 22 C-Atomen, R⁷ für H oder einen Alkylrest mit 1 bis 8 C-Atomen, n1 für eine Zahl von 1 bis 40, vorzugsweise 1 bis 30, bevorzugt 1 bis 15, insbesondere 1 bis 10, und m für 0 oder eine Zahl von 1 bis 10 steht.
Die den Fettalkoholderivaten zugrunde liegenden Alkohole können sowohl nativen als auch synthetischen Ursprungs sein.

### Fettalkoholpolypropylenglykol/polyethylenglykolether

Ebenso geeignet sind Fettalkoholpolypropylenglykol/polyethylenglykolether der Formel (IV), die gegebenenfalls endgruppenverschlossen sind,

**R**^{**8**}**O[CH**_{**2**}**(CH**_{**3**}**)CHO]**_{**q**}**(CH**_{**2**}**CH**_{**2**}**O)**_{**r**}**R**^{**9**} (IV)

in der R⁸ für einen Alkyl- und/oder Alkenylrest mit 8 bis 22 C-Atomen, R⁹ für H oder einen Alkylrest mit 1 bis 8 C-Atomen, q für eine Zahl von 1 bis 5 und r für eine Zahl von 0 bis 15 steht.

Bevorzugt sind Fettalkoholpolyethylenglykol/polypropylenglykolether der Formel (III), in der R⁶ für einen linearen oder verzweigten Alkylrest mit 8 bis 16 C-Atomen, n1 für eine Zahl von 1 bis 10, und m für 1 bis 5 und R⁷ für Wasserstoff steht. Es handelt sich hierbei um Anlagerungsprodukte von 1 bis 10 Mol Ethylenoxid und 1 bis 5 Mol Propylenoxid an monofunktionelle Alkohole.

Als Alkohole sind Alkohole nativen als auch synthetischen Ursprungs geeignet. Es kann dabei von Fettalkoholen, Oxoalkoholen, Shellalkoholen und Guerbetalkoholen ausgegangen werden.

Die endgruppenverschlossenen Verbindungen der Formel (III) sind mit einer Alkylgruppe mit 1 bis 8 C-Atomen verschlossen (R⁷). Häufig werden derartige Verbindungen in der Literatur auch als Mischether bezeichnet. Geeignete Vertreter sind Methylgruppenverschlossene Verbindungen der Formel (III), in denen R⁶ für einen aliphatischen, gesättigten, geradkettigen oder verzweigten Alkylrest mit 8 bis 16 Atomen, n1 für eine Zahl von 2 bis 7, m für eine Zahl von 3 bis 7 und R⁷ für eine Methylgruppe steht. Derartige Verbindungen können leicht durch Umsetzung der entsprechenden nicht endgruppenverschlossenen Fettalkoholpolyethylenglykol/polypropylenglykolether mit Methylchlorid in Gegenwart einer Base hergestellt werden.

Geeignete Vertreter von Alkylgruppenverschlossenen Verbindungen sind solche der Formel (III), in denen R⁶ für einen aliphatischen, gesättigten, geradkettigen oder verzweigten Alkylrest mit 8 bis 16 C-Atomen, n1 für eine Zahl von 5 bis 15, m für 0 und R⁷ für eine Alkylgruppe mit 4 bis 8 C-Atomen steht. Bevorzugt wird der Endgruppenverschluß mit einer geradkettigen oder verzweigten Butylgruppe durchgeführt, indem der entsprechende Fettalkoholpolyethylenglykolether mit n-Butylchlorid oder mit tert. Butylchlorid in Gegenwart von Basen umgesetzt wird.

Anstelle der Verbindungen der Formel (III) oder in Mischung mit ihnen können gegebenenfalls endgruppenverschlossene Fettalkoholpolypropylenglykol/polyethylenglykolether der Formel (IV) enthalten sein. Besonders bevorzugte Vertreter der Verbindungen der Formel (IV) sind solche, in denen R⁸ für einen aliphatischen, gesättigten, geradkettigen oder verzweigten Alkylrest mit 8 bis 16 C-Atomen, q für eine Zahl von 1 bis 5, r für eine Zahl von 1 bis 6 und R⁹ für Wasserstoff steht. Es handelt sich hierbei vorzugsweise um Anlagerungsprodukte von 1 bis 5 Mol Propylenoxid und von 1 bis 6 Mol Ethylenoxid an monofunktionelle Alkohole.

### Alkoxylierte Fettsäureniedrigalkylester

Als weiter nichtionische Tenside kommen **alkoxylierte Fettsäureniedrigalkylester** der Formel (V) in Betracht,

**R**^{**10**}**CO-(OCH**_{**2**}**CHR**^{**11**}**)**_{**w**}**OR**^{**12**} (V)

in der R¹⁰CO für einen linearen oder verzweigten, gesättigten und/oder ungesättigten Acylrest mit 6 bis 22 Kohlenstoffatomen, R¹¹ für Wasserstoff oder Methyl, R¹² für lineare oder verzweigte Alkylreste mit 1 bis 4 Kohlenstoffatomen und w für Zahlen von 1 bis 20 steht. Typische Beispiele sind die formalen Einschubprodukte von durchschnittlich 1 bis 20 und vorzugsweise 5 bis 10 Mol Ethylen- und/oder Propylenoxid in die Methyl-, Ethyl-, Propyl-, Isopropyl-, Butyl- und tert.-Butylester von Capronsäure, Caprylsäure, 2-Ethylhexansäure, Caprinsäure, Laurinsäure, Isotridecansäure, Myristinsäure, Palmitinsäure, Palmoleinsäure, Stearinsäure, Isostearinsäure, Ölsäure, Elaidinsäure, Petroselinsäure, Linolsäure, Linolensäure, Elaeostearinsäure, Arachinsäure, Gadoleinsäure, Behensäure und Erucasäure sowie deren technische Mischungen. Üblicherweise erfolgt die Herstellung der Produkte durch Insertion der Alkylenoxide in die Carbonylesterbindung in Gegenwart spezieller Katalysatoren, wie z.B. calcinierter Hydrotalcit. Besonders bevorzugt sind Umsetzungsprodukte von durchschnittlich 5 bis 10 Mol Ethylenoxid in die Esterbindung von technischen Kokosfettsäuremethylestern.

### Aminoxide

Als **Aminoxide** können Verbindungen der Formel **(VI)** und/oder eingesetzt werden.

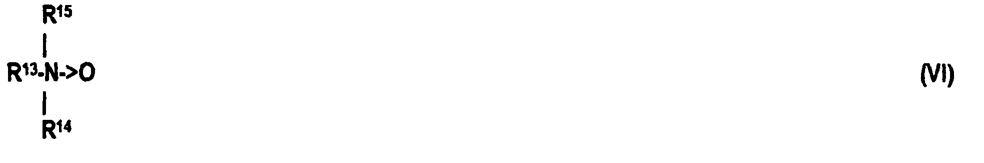

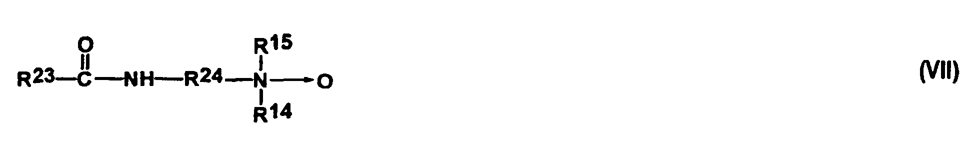

Bei der Herstellung der Aminoxide der Formel **(VI)** geht man von tertiären Fettaminen aus, die mindestens einen langen Alkylrest aufweisen, und oxidiert sie in Gegenwart von Wasserstoffperoxid. Bei den im Sinne der Erfindung in Betracht kommenden Aminoxiden der Formel **(VI)**, steht R¹³ für einen linearen oder verzweigten Alkylrest mit 6 bis 22, vorzugsweise 12 bis 18 Kohlenstoffatomen, sowie R¹⁴ und R¹⁵ unabhängig voneinander für R¹³ oder einen gegebenenfalls hydroxysubstituierten Alkylrest mit 1 bis 4 Kohlenstoffatomen. Vorzugsweise werden Aminoxide der Formel **(VI)** eingesetzt, in der R¹³ und R¹⁴ für C_{12/14}- bzw. C_{12/18}-Kokosalkylreste stehen und R¹⁵ einen Methyl- oder einen Hydroxyethylrest bedeutet. Ebenfalls bevorzugt sind Aminoxide der Formel **(VI**)**,** in denen R¹³ für einen C_{12/14}- bzw. C_{12/18}- Kokosalkylrest steht und R¹⁴ und R¹⁵ die Bedeutung eines Methyl- oder Hydroxyethylrestes haben.
Weitere geeignete Aminoxide sind **Alkylamido-**aminoxide der Formel **(VII)**, wobei der Alkylamido-Rest R²³CONH durch die Reaktion von linearen oder verzweigten Carbonsäuren, vorzugsweise mit 6 bis 22, bevorzugt mit 12 bis 18 Kohlenstoffatomen, insbesondere aus C_{12/14}- bzw. C_{12/18}- Fettsäuren mit Aminen entsteht. Dabei stellt R²⁴ eine linerare oder verzweigte Alkylengruppe dar mit 2 bis 6, vorzugsweise 2 bis 4 Kohlenstoffatomen und R¹⁴ und R¹⁵ haben die in Formel **(VI)** angegebene Bedeutung.

In einer weiteren Ausführungsform sind Mischungen bevorzugt, die die Geminitenside nach Formel (I) und weitere nichtionische Tenside im Verhältnis (a:c) 10:1 bis 1:10, vorzugsweise 5:1 bis 1:5 und besonders bevorzugt 4:1 bis 1:1 enthalten.

Bevorzugt liegen die Mischungen in fester Form als Formkörper, vorzugsweise als Granulat, Pulver, Schuppen, Pellets oder Pastillen vor.

Weiterhin werden Spül- und Reinigungsmittel beansprucht, enthaltend 0,1 bis 15 Gew.% Tenside, die Mischungen nach Anspruch 1 enthalten, 5 bis 90 Gew. % Builder, 0,1 bis 6 Gew.% Reinigungsmittelenzym, optional 0,1 bis 40 Gew.% Bleichmittel und weitere Hilfs- und Zusatzstoffe. Die Angabe Gew.% bezieht sich auf das gesammte Mittel.

Ein weiterer Gegenstand der Erfindung betrifft die Verwendung der erfindungsgemäßen Mischungen als Inhaltsstoff in Wasch-, Spül- und Reinigungsmitteln. Diese enthalten neben den erfindungsgemäßen Mischungen weitere übliche Inhaltsstoffe.

Als übliche Inhaltstsstoffe können beispielsweise Lösungsvermittler, Abrasivstoffe, Builder, Bleichmittel, Enzyme, Enzymstabilisatoren, Schauminhibitoren, Schaumregulatoren, Verdickungsmittel, Duftstoffe, Verdicker, Farbstoffe, Sprengmittel, Vergrauungsinhibitoren, Komplexiermittel und Soil repellents eingesetzt werden. Diese werden in DE 199 53 796 A1 auf den Seiten 17 bis 26 beschrieben.

Die erfindungsgemäßen Mischungen zeichnen sich durch ihre höheren Schmelzpunkte aus. Dadurch sind sie besonders zur vereinfachten Herstellung von festen Reinigerformulierungen geeignet. Ebenso lösen sich die Mischungen, durch ihre höheren Schmelzpunkte, später in der Reinungsflotte auf und entfalten zeitversetzt (controlled release), und in höherer Konzentration ihre Wirkung. Dieser Effekt kann besonders vorteilhaft in festen Kombinationsprodukten aus Reiniger und Klarspüler genutzt werden.

Weiterhin ist deshalb die Verwendung der erfindungsgemäßen Mischung zur vereinfachten Herstellung von festen Reinigerformulierungen, insbesondere zur Herstellung von maschinellen Geschirr-Reinigern bevorzugt.
Ganz besonders bevorzugt sind hierbei pulverförmige oder tablettenförmige Geschirr-Reinigungsmittel, die gleichzeitig auch eine Klarspülfunktion aufweisen können. Insbesondere bevorzugt sind dabei die "2 in 1" und "3 in 1" Rezepturen für das automatische Geschirrspülen.

Ein Vorteil der erfindungsgemäßen Mischungen ist, das diese, im Gegensatz zum "reinen Geminitensid" in fester Form mit einem deutlich höherem Schmelzpunkt vorliegen.
Die erfindungsgemäßen Mischungen können durch Verfahren wie die Verschuppung, Pelletierung, Extrusion, Sprühkristallisation, Vertropfung und durch Trocknen und Granulieren in dünnen Schichten (Flash-Dryer) in verschiedene Formkörper überführt werden, die durch ihre hohen Schmelzpunkte bei Temperaturschwankungen z.B. während der Lagerung (Sommer-Winter) sehr gur gehandhabt und verarbeitet werden können.

### Verfahren

Ein weiterer Gegenstand der Erfindung sind demzufolge Verfahren zur Herstellung von Formkörpern enthaltend die erfindungsgemäßen Mischungen. Die Formkörper können durch Verfahren wie Verschuppung, Pelletierung, Extrusion, Sprühkristallisation, Vertropfung und/oder Trocknen und Granulieren in der dünnen Schicht (Flash-Dryer) hergestellt werden. Ebenfalls können mehrere Verfahren miteinander kombiniert werden.

### Verschuppung

Hierbei wird die geschmolzene, erfindungsgemäße Mischung in einer definierten Schichtdickte auf eine Walze oder ein Band, meist aus Metall, aufgebracht. Meist wird die Oberfläche der Walze oder des Bandes auf der dem Produkt abgewandten Seite aktiv gekühlt. Ist das Produkt erstarrt wird es durch Schaber von der Walze bzw. vom Band entfernt. Bei Bändern reicht oft die Umlenkung des Bandes am Endpunkt, damit das Produkt abplatzt. Gegebenfalls können die Schuppen durch weitere Zerkleinerungsprozesse in ihrer Teilchengröße weiter verändert werden.

### Pelletierung

Die Formkörper, die die erfindungsgemäßen Mischungen enthalten, können mittels einer Pelletierung hergestellt werden. Hierbei wird das Vorgemisch auf eine perforierte Fläche aufgebracht und mittels eines druckgebenden Körpers unter Plastifizierung durch die Löcher gedrückt. Bei üblichen Ausführungsformen von Pelletpressen wird das Vorgemisch unter Druck verdichtet, plastifiziert, mittels einer rotierenden Walze in Form feiner Stränge durch eine perforierte Fläche gedrückt und schließlich mit einer Abschlagvorrichtung zu Granulatkömem zerkleinert. Hierbei sind die unterschiedlichsten Ausgestaltungen von Druckwalze und perforierter Matrize denkbar. So finden beispielsweise flache perforierte Teller ebenso Anwendung wie konkave oder konvexe Ringmatrizen, durch die das Material mittels einer oder mehrerer Druckwalzen hindurchgepreßt wird. Die Preßrollen können bei den Tellergeräten auch konisch geformt sein, in den ringförmigen Geräten können Matrizen und Preßrolle(n) gleichläufigen oder gegenläufigen Drehsinn besitzen. Ein zur Durchführung des Verfahrens geeigneter Apparat wird beispielsweise in der deutschen Offenlegungsschrift **DE 3816842 A1** beschrieben. Die in dieser Schrift offenbarte Ringmatrizenpresse besteht aus einer rotierenden, von Preßkanälen durchsetzten Ringmatrize und wenigstens einer mit deren Innenfläche in Wirkverbindung stehenden Preßrolle, die das dem Matrizenraum zugeführte Material durch die Preßkanäle in einen Materialaustrag preßt. Hierbei sind Ringmatrize und Preßrolle gleichsinnig antreibbar, wodurch eine verringerte Scherbelastung und damit geringere Temperaturerhöhung des Vorgemischs realisierbar ist. Selbstverständlich kann aber auch bei der Pelletierung mit heiz- oder kühlbaren Walzen gearbeitet werden, um eine gewünschte Temperatur des Vorgemischs einzustellen. Auch bei der Pelletierung liegt die Temperatur der pressenden Werkzeuge, also der Druckwalzen oder Preßrollen, bevorzugt bei maximal 150 °C, vorzugsweise bei maximal 100 °C und insbesondere bei maximal 75 °C. Besonders bevorzugte Herstellungsverfahren arbeiten bei der Walzenkompaktierung mit Verfahrenstemperaturen, die 10 °C, insbesondere maximal 5 °C oberhalb der Schmelztemperatur bzw. der oberen Temperaturgrenze des Schmelzbereichs des Bindemittels liegen.

### Extrusion

Auch können Formkörper, enthaltend die erfindungsgemäßen Mischungen, mittels einer Extrusion hergestellt werden, wie sie beispielsweise in dem europäischen Patent **EP 0486592 B1** oder den internationalen Patentanmeldungen **WO 93/02176** und **WO 94/09111** bzw. **WO 98/12299** beschrieben werden. Dabei wird ein festes Vorgemisch unter Druck strangförmig verpresst und der Strang nach Austritt aus der Lochform mittels einer Schneidevorrichtung auf die vorbestimmbare Granulatdimension zugeschnitten. Das homogene und feste Vorgemisch enthält ein Plastifizier- und/oder Gleitmittel, welches bewirkt, dass das Vorgemisch unter dem Druck bzw. unter dem Eintrag spezifischer Arbeit plastisch erweicht und extrudierbar wird. Bevorzugte Plastifizier- und/oder Gleitmittel sind Tenside und/oder Polymere. Zur Erläuterung des eigentlichen Extrusionsverfahrens wird hiermit ausdrücklich auf die obengenannten Patente und Patentanmeldungen verwiesen. Vorzugsweise wird dabei das Vorgemisch vorzugsweise einem Planetwalzenextruder oder einem 2-Wellen-Extruder bzw. 2-Schnecken-Extruder mit gleichlaufender oder gegenlaufender Schneckenführung zugeführt, dessen Gehäuse und dessen Extruder-Granulierkopf auf die vorbestimmte Extrudiertemperatur aufgeheizt sein können. Unter der Schereinwirkung der Extruderschnecken wird das Vorgemisch unter Druck, der vorzugsweise mindestens 25 bar beträgt, bei extrem hohen Durchsätzen in Abhängigkeit von dem eingesetzten Apparat aber auch darunter liegen kann, verdichtet, plastifiziert, in Form feiner Stränge durch die Lochdüsenplatte im Extruderkopf extrudiert und schließlich das Extrudat mittels eines rotierenden Abschlagmessers vorzugsweise zu etwa kugelförmigen bis zylindrischen Granulatkömern verkleinert. Der Lochdurchmesser der Lochdüsenplatte und die Strangschnittlänge werden dabei auf die gewählte Granulatdimension abgestimmt.
So gelingt die Herstellung von Granulaten einer im wesentlichen gleichmäßig vorherbestimmbaren Teilchengröße, wobei im einzelnen die absoluten Teilchengrößen dem beabsichtigten Einsatzzweck angepasst sein können. Im allgemeinen werden Teilchendurchmesser bis höchstens 0,8 cm bevorzugt. Wichtige Ausführungsformen sehen hier die Herstellung von einheitlichen Granulaten im Millimeterbereich, beispielsweise im Bereich von 0,5 bis 5 mm und insbesondere im Bereich von etwa 0,8 bis 3 mm vor. Das Länge/Durchmesser-Verhältnis der abgeschlagenen primären Granulate liegt dabei vorzugsweise im Bereich von etwa 1 : 1 bis etwa 3:1.
Weiterhin ist es bevorzugt, das noch plastische Primärgranulat einem weiteren formgebenden Verarbeitungsschritt zuzuführen; dabei werden am Rohextrudat vorliegende Kanten abgerundet, so dass letztlich kugelförmig bis annähernd kugelförmige Extrudatkörner erhalten werden können.
Falls gewünscht können in dieser Stufe geringe Mengen an Trockenpulver, beispielsweise Zeolithpulver wie Zeolith NaA-Pulver, mitverwendet werden. Diese Formgebung kann in marktgängigen Rondiergeräten erfolgen. Dabei ist darauf zu achten, dass in dieser Stufe nur geringe Mengen an Feinkornanteil entstehen. Eine Trocknung, welche in den oben genannten Dokumenten des Standes der Technik als bevorzugte Ausführungsform beschrieben wird, ist anschließend möglich, aber nicht zwingend erforderlich. Es kann gerade bevorzugt sein, nach dem Kompaktierungsschritt keine Trocknung mehr durchzuführen. Alternativ können Extrusionen/Verpressungen auch in Niedrigdruckextrudern, in der Kahl-Presse (Fa. Amandus Kahl) oder im Bextruder der Fa. Bepex durchgeführt werden. Bevorzugt ist die Temperaturführung im Übergangsbereich der Schnecke, des Vorverteilers und der Düsenplatte derart gestaltet, dass die Schmelztemperatur des Bindemittels bzw. die obere Grenze des Schmelzbereichs des Bindemittels zumindest erreicht, vorzugsweise aber überschritten wird. Dabei liegt die Dauer der Temperatureinwirkung im Kompressionsbereich der Extrusion vorzugsweise unterhalb von 2 Minuten und insbesondere in einem Bereich zwischen 30 Sekunden und 1 Minute.

### Sprühkristallisation

Bei diesem Verfahren sind im Kopf eines Sprühturmes mehrere Einstoff-Druckdüsen, sogenannte Vollkegeldüsen installiert, über die die Einsatzstoffe in den Sprühturm zerstäubt werden. Dabei reißt der mit hoher Turbulenz aus der Düse austretende Strahl schon nach kurzer Entfernung von der Düsenmündung auf und bildet Tropfen, wobei das Aufreißen durch den Drall des Strahls noch zusätzlich verstärkt wird. Das auf diese Art und Weise hergestellte Kristallisationsprodukt weist ein breites Korngrößenspektrum auf.

### Eine Sonderform der Sprühkristallisation ist Vertropfung

### Vertropfung

Weiterhin bevorzugt ist die Herstellung von der Formkörper, enthaltend die erfindungsgemäßen Mischungen, durch Vertropfung mit Hilfe einer vibrierenden Gießerplatte, die bereits für die Verarbeitung von synthetischen Wachsen, Harzen sowie niedrigviskosen Polyestern bekannt ist. Entsprechende Bauteile werden beispielsweise von der Firma Rieter-Automatik unter Bezeichnung "Droppo Line" für den Einsatz in der Textiltechnik vertrieben. Im Sinne des erfindungsgemäßen Verfahrens sind solche Gießerplatten bevorzugt, welche als Lochscheiben geformt sind, durch deren Öffnungen die Tropfen dann in den Sprühturm tropfen können. Die Leistung solcher Lochscheiben kann vorzugsweise im Bereich von 100 bis 800 kg/h liegen und beträgt insbesondere etwa 500 kg/h, der Durchmesser der Bohrungen liegt zwischen 0,5 (Durchmesser der Granulate im Mittel 0,8 mm) und 1,4 mm (Durchmesser der Granulate im Mittel 2,5 mm). Die Schwingungsfrequenz, die den wässrigen Tensidzubereitungen aufgeprägt wird, liegt typischerweise im Bereich von 100 bis 1000 und vorzugsweise 500 bis 800 Hz. Ein weiterer Vorteil gegenüber den herkömmlichen Verfahren besteht ferner darin, dass mit nur geringem Überdruck (typisch : 10 bis 100 mbar) gearbeitet werden kann. Die Trocknung innerhalb des Sprühturms kann mit Heißluft bzw. heißen Verbrennungsgasen bei Temperaturen beispielsweise im Bereich von 100 bis 150 °C im Gegenstrom erfolgen, wie dies im Stand der Technik hinreichend beschrieben wird. Die Granulate sind annähernd kugelförmig und weisen danach in Abhängigkeit der Öffnungen in der Lochplatte und der Frequenz durchschnittliche Durchmesser im Bereich von 1 bis 2,5 mm auf. Der Staubanteil, d.h. Partikel mit Teilchengrößen kleiner 0,5 mm ist dabei praktisch Null.

### Trocknen und Granulieren in der dünnen Schicht (Flash-Dryer)

Die gleichzeitige Trocknung und Granulierung zur Herstellung von Formkörpern kann in einem horizontal angeordneten Dünnschichtverdampfer mit rotierenden Einbauten erfolgen, wie er z.B. von der Firma VRV unter der Bezeichnung "Flash-Dryer" vertrieben wird. Hierbei handelt es sich, vereinfacht dargestellt, um ein Rohr, das über mehrere Zonen hinweg unterschiedlich temperiert werden kann. Über eine oder mehrere Wellen, die mit Blättern oder Flugscharen als rotierende Einbauten versehen sind, wird das Einsatzmaterial, das über eine Pumpe eindosiert wird, gegen die beheizte Wandung geschleudert, an der die Trocknung in einer dünnen Schicht von typischerweise 1 bis 10 mm Stärke bei Temperaturen von in der Regel 100 bis 200 °C erfolgt. Der Dünnschichtverdampfer wird bei atmosphärischem Bedingungen oder reduziertem Druck betrieben und im Gegenstrom mit Luft (Durchsatz 50 bis 150 m³/h) begast. Die Eintrittstemperatur des Gases liegt in der Regel bei 20 bis 30, die Austrittstemperatur bei 100 bis 130°C. Die Durchsatzmenge ist natürlich von der Größe des Trockners abhängig, liegt jedoch typischerweise bei 5 bis 15 kg/h. Es empfiehlt sich bei Einspeisung, von Pasten, diese auf 40 bis 60°C zu temperieren. Nach der Trocknung hat es sich weiterhin als sehr vorteilhaft erwiesen, die noch etwa 30 bis 50°C heißen Granulate auf ein Förderband, vorzugsweise eine Schwingwelle zu geben und dort rasch, d.h. innerhalb einer Verweilzeit von 20 bis 60 s abzukühlen. Die erfindungsgemäßen Mischungen können hierbei, zur besseren Steuerung der Granulation, zunächst mit Wasser (10 bis 40 Gew.%) vermischt werden.

### Beispiele

In Tabelle 1 sind verschiedene Mischungen und deren Schmelzpunkte dargestellt. V1 bis V4 stellen Vergleichsbeispiele dar, 1 bis 11 sind die erfindungsgemäßen Beispiele. Die Zusammensetzungen werden in Gewichtsprozent Gew.% - bezogen auf die gesammte Mischung - direkt angegeben.

**Tabelle 1**

| Zusammensetzung in Gew. % | V1 | V2 | V3 | V4 | 1 | 2 | 3 | 4 | 5 | 6 | 7 | 8 | 9 | 10 | 11 |
|---|---|---|---|---|---|---|---|---|---|---|---|---|---|---|---|
| | | | | | | | | | | | | | | | |
| 2-Hydroxydodecylether-PEG 600-2-Hydroxydodecylether | 100 | - | - | - | 80 | - | 50 | - | 90 | - | 95 | 80 | 90 | 50 | 60 |
| 2-Hydroxydodecylether-PEG 1500-2-Hydroxydodecylether | - | 100 | 80 | - | - | 80 | - | 50 | - | 90 | - | - | - | - | - |
| | | | | | | | | | | | | | | | |
| C12-14-FA+5EO/4PO (Dehypon LS 54) | - | - | 20 | - | - | - | - | - | - | - | - | - | - | 30 | - |
| C13-15-FA+6EO/3PO (Symperonic RA 30) | - | - | - | 100 | - | - | - | - | - | - | - | - | - | - | 20 |
| | | | | | | | | | | | | | | | |
| PEG 1550 | - | - | - | - | - | - | - | 50 | - | - | - | - | - | - | - |
| PEG3000 | - | - | - | - | 20 | 20 | 50 | - | 10 | 10 | 5 | - | - | 20 | 20 |
| PEG 12000 | - | - | - | - | - | - | - | - | - | - | - | 20 | 10 | - | - |
| | | | | | | | | | | | | | | | |
| Schmelzpunkt [°C] | 27 | 43 | 40 | flüssig | 54 | 54 | 56 | 46 | 55 | 47 | 54 | 65 | 65 | 54 | 53 |
| | | | | (bei RT) | | | | | | | | | | | |
| RT: Raumtemperatur | | | | | | | | | | | | | | | |

## Patentansprüche

1. Mischungen enthaltend,
a. Geminitenside gemäß Formel (I)
**R**^{**1**}**-CHOH-CH**_{**2**}**-[OCH**_{**2**}**CH**_{**2**}**]x-O-CH**_{**2**}**-CHOH-R** (I)
in der R und R1 unabhängig voneinander für einen linearen oder verzweigten Alkyl- und/oder Alkenylrest mit 4 bis 22 Kohlenstoffatomen und x für 5 bis 400 steht,
b. Polyethylenglycol (PEG) und,
c. gegebenenfalls weitere nichtionische Tenside,
**dadurch gekennzeichnet, dass** die Mischungen Geminitenside der Formel (I) und Polyethylenglycol im Verhältnis (a:b) 100:1 bis 1:2 vorliegen.

2. Mischungen nach Anspruch 1, **dadurch gekennzeichnet, dass** die Mischungen Geminitenside der Formel (I) und Polyethylenglycol im Verhältnis (a:b) 20:1 bis 1:1 und besonders bevorzugt 10:1 bis 2:1 enthalten.

3. Mischungen nach Anspruch 1 oder 2, **dadurch gekennzeichnet, dass** die Mischungen Geminitenside der Formel (I) enthalten sind, wobei x für 10 bis 100, vorzugsweise 10 bis 50 steht.

4. Mischungen nach Anspruch 1 bis 3, **dadurch gekennzeichnet, dass** Geminitenside der Formel (I) enthalten sind, wobei R und R1 unabhängig voneinander für einen linearen oder verzweigten Alkylrest mit 4 bis 22 Kohlenstoffatomen, vorzugsweise für einen linearen Alkylrest mit 8 bis 12 Kohlenstoffatomen stehen.

5. Mischungen nach einem der Ansprüche 1 bis 4, **dadurch gekennzeichnet, dass** Geminitenside der Formel (I) enthalten sind, erhalten durch Reaktion von Polyethylenglycol mit Epoxyalkanen, wobei mindestens 60%, vorzugsweise 90% aller freien Hydroxygruppen des Polyethylenglycols durch Epoxyalkane verschlossen sind.

6. Mischungen nach einem der Ansprüche 1 bis 5, **dadurch gekennzeichnet, dass** Polyethylenglycol ein Molgewicht (g/mol) von 500 bis 300 000, vorzugsweise 1000 bis 100 000, bevorzugt 1500 bis 50 000 und insbesondere bevorzugt von 1550 bis 20 000 aufweist.

7. Mischungen nach einem der Ansprüche 1 bis 6, **dadurch gekennzeichnet, dass** Geminitenside der Formel (I), wobei x für 10 bis 50 steht und Polyethylenglycol mit einem Molgewicht von 3000 bis 20 000 g/mol enthalten sind.

8. Mischungen nach einem der Ansprüche 1 bis 7, **dadurch gekennzeichnet, dass** sie weitere nichtionische Tenside enthalten, die ausgewählt sind aus der Gruppe, die gebildet wird von Alkyl- und/oder Alkenyloligoglycosiden, Alkoxylaten von Alkanolen, endgruppenverschlossenen Alkoxylaten von Alkanolen ohne freie OH-Gruppen, alkoxylierten Fettsäureniedrigalkylestern und Aminoxiden.

9. Mischungen nach einem der Ansprüche 1 bis 8, **dadurch gekennzeichnet, dass** sie als weitere nichtionische Tenside vorzugsweise Alkyl- und/oder Alkenyloligoglycoside der Formel (II), Fettalkoholpolyethylenglykol/polypropylenglykolether der Formel (III) bzw. Fettalkoholpolypropylenglykol/polyethylenglykolether der Formel (IV) oder deren Mischungen enthalten.

10. Mischungen nach einem der Ansprüche 1 bis 9, **dadurch gekennzeichnet, dass** Geminitenside der Formel (I) und die weiteren nichtionischen Tenside im Verhältnis (a:c) 10:1 bis 1:10, vorzugsweise 5:1 bis 1:5 und besonders bevorzugt 4:1 bis 1:1 vorliegen.

11. Mischungen nach einem der vorliegenden Ansprüche 1 bis 10, **dadurch gekennzeichnet, dass** sie in fester Form als Formkörper, vorzugsweise als Granulat, Pulver, Schuppen, Pellets oder Pastillen vorliegen.

12. Spül- und Reinigungsmittel, enthaltend
a. 0,1 bis 15 Gew.% -bezogen auf die Mittel- Tenside, die Mischungen nach Anspruch 1 enthalten
b. 5 bis 90 Gew. % -bezogen auf die Mittel- Builder
c. 0,1 bis 6 Gew.% -bezogen auf die Mittel- Reinigungsmittelenzym
d. optional 0,1 bis 40 Gew.% -bezogen auf die Mittel- Bleichmittel und
e. weitere Hilfs- und Zusatzstoffe.

13. Verwendung von Mischungen nach Anspruch 1 als Inhaltsstoffe in Wasch-, Spül und Reinigungsmitteln.

14. Verwendung von Mischungen nach Anspruch 1 zur Verbesserung des Netzverhaltens, in Spül- und Reinigungsmitteln.

15. Verwendung von Mischungen nach Anspruch 1 zur vereinfachten Herstellung von festen Reinigerformulierungen, insbesondere maschinelle Geschirr-Reiniger.

16. Verfahren zur Herstellung von Formkörpern enthaltend Mischungen nach Anspruch 1, **dadurch gekennzeichnet, dass** sie durch Verschuppung, Pelletierung, Extrusion, Sprühkristallisation, Vertropfung und/oder durch Trocknen und Granulieren in der dünnen Schicht (Flash-Dryer) hergestellt werden.

## Claims

1. Mixtures comprising
a. gemini surfactants of the formula (I)
**R**^{**1**}**-CHOH-CH**_{**2**}**-[OCH**_{**2**}**CH**_{**2**}**]x-O-CH**_{**2**}**-CHOH-R** (I)
in which R and R1, independently of one another, are a linear or branched alkyl and/or alkenyl radical having 4 to 22 carbon atoms and x is 5 to 400,
b. polyethylene glycol (PEG) and
c. optionally further nonionic surfactants,
**characterized in that** the mixtures comprise gemini surfactants of the formula (I) and polyethylene glycol in the ratio (a:b) 100:1 to 1:2.

2. Mixtures according to Claim 1, **characterized in that** the mixtures comprise gemini surfactants of the formula (I) and polyethylene glycol in the ratio (a:b) 2:1 to 1:1, and particularly preferably 10:1 to 2:1.

3. Mixtures according to Claim 1 or 2, **characterized in that** the mixtures comprise gemini surfactants of the fomula (I), where x is 10 to 100, preferably 10 to 50.

4. Mixtures according to Claims 1 to 3, **characterized in that** gemini surfactants of the formula (I) are present where R and R1, independently of one another, are a linear or branched alkyl radical having 4 to 22 carbon atoms, preferably a linear alkyl radical having 8 to 12 carbon atoms.

5. Mixtures according to one of Claims 1 to 4, **characterized in that** gemini surfactants of the formula (I) are present, obtained by reaction of polyethylene glycol with epoxyalkanes, where at least 60%, preferably 90%, of all free hydroxyl groups of the polyethylene glycol are capped by epoxyalkanes.

6. Mixtures according to one of Claims 1 to 5, **characterized in that** polyethylene glycol has a molecular weight (g/mol) of from 500 to 300 000, preferably 1000 to 100 000, preferably 1500 to 50 000 and particularly preferably 1550 to 20 000.

7. Mixtures according to one of Claims 1 to 6, **characterized in that** gemini surfactants of the formula (I) where x is 10 to 50 and polyethylene glycol with a molecular weight of from 3000 to 20 000 g/mol are present.

8. Mixtures according to one of Claims 1 to 7, **characterized in that** they comprise further nonionic surfactants chosen from the group formed by alkyl and/or alkenyl oligoglycosides, alkoxylates of alkanols, terminally capped alkoxylates of alkanols without free OH groups, alkoxylated fatty acid lower alkyl esters and amine oxides.

9. Mixtures according to one of Claims 1 to 8, **characterized in that** they comprise, as further nonionic surfactants, preferably alkyl and/or alkenyl oligoglycosides of the formula (II), fatty alcohol polyethylene glycol/polypropylene glycol ethers of the formula (III) or fatty alcohol polypropylene glycol/polyethylene glycol ethers of the formula (IV) or mixtures thereof.

10. Mixtures according to one of Claims 1 to 9, **characterized in that** gemini surfactants of the formula (I) and the further nonionic surfactants are present in the ratio (a:c) 10:1 to 1:10, preferably 5:1 to 1:5 and particularly preferably 4:1 to 1:1.

11. Mixtures according to one of the present Claims 1 to 10, **characterized in that** they are in solid form as shaped bodies, preferably as granules, powder, flakes, pellets or tablets.

12. Dishwashing detergent and cleaner comprising
a. 0.1 to 15% by weight, based on the composition, of surfactants which comprise mixtures according to Claim 1,
b. 5 to 90% by weight, based on the composition, of builders
c. 0.1 to 6% by weight, based on the composition, of detergent enzyme
d. optionally 0.1 to 40% by weight, based on the composition, of bleaches and
e. further auxiliaries and additives.

13. Use of mixtures according to Claim 1 as ingredients in laundry detergents, dishwashing detergents and cleaners.

14. Use of mixtures according to Claim 1 for improving the wetting behaviour in dishwashing detergents and cleaners.

15. Use of mixtures according to Claim 1 for the simplified preparation of solid cleaner formulations, in particular machine dishwashing detergents.

16. Process for the preparation of shaped bodies comprising mixtures according to Claim 1, **characterized in that** they are prepared by flaking, pelleting, extrusion, spray crystallization, drop formation and/or by drying and granulation in a thin layer (flash dryer).

## Revendications

1. Mélanges contenant
a. des agents tensioactifs géminés selon la formule (I)
**R**^{**1**}**-CHOH-CH**_{**2**}**-[OCH**_{**2**}**CH**_{**2**}**]**_{**x**}**-O-CH**_{**2**}**-CHOH-R** (I)
dans laquelle R et R¹ représentent indépendamment l'un de l'autre un radical alkyle et/ou alcényle linéaire ou ramifié comportant de 4 à 22 atomes de carbone et x vaut de 5 à 400,
b. un polyéthylèneglycol (PEG), et
c. le cas échéant d'autres agents tensioactifs non ioniques,
**caractérisés en ce que**
les mélanges sont des agents tensioactifs géminés de formule (I) et contiennent un polyéthylèneglycol dans un rapport (a : b) de 100 : 1 à 1 : 2.

2. Mélanges selon la revendication 1,
**caractérisés en ce que**
les mélanges contiennent des agents tensioactifs géminés de formule (I) et un polyéthylèneglycol dans un rapport (a : b) allant de 20 : 1 à 1 : 1 et en particulier de 10 : 1 à 2 : 1.

3. Mélanges selon la revendication 1 ou 2,
**caractérisés en ce que**
les mélanges contiennent des agents tensioactifs géminés de formule (I) dans laquelle x vaut de 10 à 100, de préférence de 10 à 50.

4. Mélanges selon les revendications 1 à 3,
**caractérisés en ce qu'**
ils contiennent des agents tensioactifs géminés de formule (I) dans laquelle R et R¹ représentent indépendamment l'un de l'autre un radical alkyle linéaire ou ramifié comportant de 4 à 22 atomes de carbone, de préférence un radical alkyle linéaire comportant de 8 à 12 atomes de carbone.

5. Mélanges selon l'une des revendications 1 à 4,
**caractérisés en ce qu'**
ils contiennent des agents tensioactifs géminés de formule (I) obtenus par réaction de polyéthylèneglycol avec des époxyalcanes, où au moins 60 %, de préférence 90 % de tous les groupes hydroxy libres du polyéthylèneglycol sont bloqués par des époxyalcanes.

6. Mélanges selon l'une des revendications 1 à 5,
**caractérisés en ce que**
le polyéthylèneglycol présente un poids moléculaire (g/mol) de 500 à 300 000, de préférence de 1000 à 100 000, de préférence encore de 1500 à 50 000 et de façon particulièrement préférée de 1550 à 20 000.

7. Mélanges selon l'une des revendications 1 à 6,
**caractérisés en ce qu'**
ils contiennent des agents tensioactifs géminés de formule (I) dans laquelle x vaut de 10 à 50 et un polyéhylèneglycol ayant un poids moléculaire de 3000 à 20 000 g/mol.

8. Mélanges selon l'une des revendications 1 à 7,
**caractérisés en ce qu'**
ils contiennent d'autres agents tensioactifs non ioniques choisis dans le groupe formé par les alkyl- et/ou alcényloligoglycosides, les alcoxylates d'alcanols, les alcoxylates d'alcanols bloqués à leurs groupes d'extrémité et dépourvus de groupes OH libres, les esters alkyliques inférieurs d'acides gras alcoxylés et les aminoxydes.

9. Mélanges selon l'une des revendications 1 à 8,
**caractérisés en ce qu'**
ils contiennent comme autres agents tensioactifs non ioniques de préférence des alkyl- et/ou alcényloligoglycosides de formule (II), des polyéthylèneglycols d'alcools gras/polypropylèneglycoléthers de formule (III), respectivement des polypropylèneglycols d'alcools gras/polyéthylèneglycoléthers de formule (IV) ou leurs mélanges.

10. Mélanges selon l'une des revendications 1 à 9,
**caractérisés en ce que**
les agents tensioactifs géminés de formule (I) et les autres agents tensioactifs se présentent dans un rapport (a : c) de 10 : 1 à 1 : 10, de préférence de 5 : 1 à 1 : 5 et de façon particulièrement préférée de 4 : 1 à 1 : 1.

11. Mélanges selon l'une des présentes revendications 1 à 10,
**caractérisés en ce qu'**
ils se présentent en tant que forme solide sous forme d'articles moulés, de préférence sous forme de granulé, de poudre, de paillettes, de boulettes ou de pastilles.

12. Produits de rinçage et de nettoyage contenant
a. de 0,1 à 15 % en poids - par rapport aux produits - d'agents tensioactifs contenant des mélanges selon la revendication 1,
b. de 5 à 90 % en poids - par rapport aux produits - d'adjuvants de détergence,
c. de 0,1 à 6 % en poids - par rapport aux produits - d'une enzyme de produit de nettoyage,
d. facultativement, de 0,1 à 40 % en poids - par rapport aux produits - d'agents de blanchiment, et
e. le cas échéant d'autres adjuvants et additifs.

13. Utilisation de mélanges selon la revendication 1 comme constituants des produits de lavage, de rinçage et de nettoyage.

14. Utilisation de mélanges selon la revendication 1 pour améliorer le comportement de mouillage des produits de rinçage et de nettoyage.

15. Utilisation de mélanges selon la revendication 1 pour simplifier la préparation de formulations de produits de nettoyage solides, en particulier d'un produit de nettoyage pour le lavage de la vaisselle en machine.

16. Procédé de fabrication d'articles moulés contenant des mélanges selon la revendication 1,
**caractérisé en ce qu'**
ils sont produits par réduction en paillettes, ou en pastilles, par extrusion, par cristallisation par pulvérisation, par égouttage et/ou séchage et granulation en couche mince (dans un appareil dit « Flash-Dryer »).
